# EUROPEAN PATENT SPECIFICATION

(11) **EP 1 464 470 B1**
(45) Date of publication and mention of the grant of the patent: **18.10.2006**
(21) Application number: 04425211.2
(22) Date of filing: 25.03.2004
(51) Int. Cl.: B29C 63/00, B27D 5/00

(54) **Machine for edge-banding wooden panels with optical device and computerised system for acquiring profiles of workpieces**
Kantenanleimmaschine mit optischer Vorrichtung und rechnergestütztes System zum Sammeln von Profildaten
Plaqueuse de chant de panneaux en bois avec dispositif optique et système informatique pour l'acquisition des profils des pièces

(30) Priority: 01.04.2003 IT RN20030009
(43) Date of publication of application: 06.10.2004
(73) Proprietor: SCM GROUP S.p.A., 47900 Rimini (IT)
(72) Inventor: Rosati, Massimo, 61100 Pesaro (IT)
(74) Representative: Lanzoni, Luciano

(56) References cited:
- EP-A- 0 919 357
- EP-A- 0 945 235
- DE-A1- 19 741 163
- DE-U1- 20 108 373
- US-A- 4 891 530
- US-A- 5 201 351

## Description

The present invention relates to a linear edge-banding machine for panels made of wood and similar materials, as a whole of the type substantially known in the sector for the secondary machining of wood, and in particular completion of flat parts, normally rectangular, of furniture such as modular kitchens, office desks and the like.

Such machines are designed to apply a covering strip, normally made of a synthetic material, to at least one of the lateral edges of the panels in transit in the machine, and to correctly finish the appearance of the strip applied to the edge. These operations are known as a whole under the name of panel edge-banding.

In the above-mentioned linear edge-banding machines, the panels are inserted in succession and fed by means of a conveyor, normally of the belt type, driven by the driving wheel of the two wheels between which it is stretched. The panels are clamped on the conveyor by the vertical action of an upper presser, normally in the form of a roller conveyor or idle belt, and fed forwards in this way. The edging strip is applied to the edge of the panels by gluing in a special station on the machine, where shears then cut most of the excess edging strip applied from the roll, deliberately leaving a small longitudinal excess at the front and rear of the panel, and a transversal excess relative to the upper and lower surfaces of the panel. In the particular case of edges with a rectangular profile, the cutting to size (longitudinal end trimming) and the transversal trimming are performed using rotary tools, in two successive stations of the machine, as already indicated with particular emphasis on the aesthetic finish. However, in the rather common case in which the front or rear profile of the panel is shaped - for example semi-circular - the edging strip applied is finished so that it perfectly follows the profile of the edge using two rotary tools, substantially routers, called trimmers, one lower and one upper, operating according to predetermined strategies on each machine, on the respective lower and upper parts of the edge of the panel in transit, and at the front and rear of the panel.

Therefore, on these machines trimming must normally be carried out precisely in order to obtain workpieces of satisfactory appearance, also operating rapidly, but above all, flexible operation is necessary for the many front and rear profiles which different batches of panels - or different mixes of them - may have on each occasion, suitably adjusting the trimming - i.e.: the trajectories of the trimming tools - to the different edge profiles. DE-U1-201,08,373 discloses a machine according to the preamble of claim 1. The invention relates in particular to an edge-banding machine on which a new system is implemented, able to manage in an extremely flexible and advantageous way the action of the trimming tool units, according to the front and rear profiles of the edges for each panel (or batch) being machined, as described below.

The prior art for the edge-banding machine sector includes various methods for trimming the edging strip applied at the front and rear of the panels, if said ends have curved profiles. Two basic systems may be referred to, which may give rise to a number of variations.

First systems for profile recognition are based on mechanical feelers, also known as tracers, which by means of a part in contact with the panel (normally a wheel), and connected to the tools, follow the profile close to the edge while the panel is fed forwards in the machine, and in this way guide the cutting trajectories.

Second systems for identifying the panel profile are based on the possibility of preliminarily entering a profile identification code using the machine electronic control means in order to retrieve the geometric characteristics of the profile from a library stored in the memory. It is also possible to enter the geometric characteristics of the profiles directly in an input template provided by the machine software, without going through the library.

However, the known solutions in which edge-banding machines are equipped with the above-mentioned profile recognition systems have a series of disadvantages.

Relative to the first systems described, it should be noticed that their operation may give rise to unwanted vibration or bouncing of the tracer part on the profile which it follows, the result being that the cutting motion used to guide the trimming tool no longer precisely corresponds to the profile of the edge, but is instead characterised by a more or less accentuated stepped shape, which gives the workpiece being machined a poor aesthetic finish. Obviously, this disadvantage is more serious the greater the speed with which the tracer hits the edge and the more irregular the profile of the edge is at the front or rear. With respect to this, it is important to mention the positive fact that the system cannot give large errors on the profile and its operation is fully automated.

With relation to the second systems described, it must be said that entering the code for each pair of edges (front and rear) for each batch in the mix of panels fed in is a laborious task, since the individual batches could consist of very small numbers (especially where a high level of flexibility is applied in the machining), and so the data entry operations may be very demanding. This fact may lead to incorrect entry of profile data, and so generate large errors in workpiece machining (e.g.: trimming of workpieces according to profiles which do not match them), with a high probability of accidents, loss of the panels being machined, or damage to the tools used. On the other hand, if data entry is correct, the profile according to which the units are issued with cutting commands is precisely that of the nominal profile, and so is free of errors.

This having been said, it is clear how the two above-mentioned edge profile recognition systems each have a series of advantages and respective disadvantages, which make their use appropriate if factors linked to a better finish rather than the risk of incorrect machining are preferred, for example on top quality batches.

Therefore, in an edge-banding machine which conforms to the current prior art, that is to say, equipped with one of the above-mentioned profile recognition systems, there are noticeable problems in use, linked to the aspects listed above, which - even if in the past have been in some way accepted - now become quite important since the furniture market no longer compromises on component finishing. Such problems are accentuated as soon as one also considers the high cost of edge-banding machines, which necessitates the production of workpieces with minimal rejects and with the best possible finish, for a more rapid return on the investment made.

Therefore, a machine which has a system which does not require the entry of edge profile identification data each time, and which also operates without vibration and bouncing problems when acquiring the profiles (in other words, which can operate whilst avoiding the problems of mass dynamics at least during profile acquisition), would be a solution to the problems described above.

The aim of the present invention is, through the use of a particular system for recognition of the front and rear profiles of the edge in the machine, to overcome the above-mentioned disadvantages; in particular, by introducing on the edge-banding machine a system which can optically recognise the profile fed in, resulting in correct- trimming routing of the edging strip on the edge, without the operator having to enter data and without errors caused by vibration, which was not possible with the devices in the prior art.

Accordingly, the invention, as characterised in the claims, solves the problem of producing an edge-banding machine equipped with units for trimming the excess edging strip applied to the edge, guided by an opto-electronic profile detection system, which substantially has all of the advantages linked to each of the above-mentioned systems in the prior art. All of this is done with a very simple construction and versatile operation, and at the same time maintaining the functional characteristics of the previous embodiments of edge-banding machines, or rather improving on them. The idea developed below fulfils the above-mentioned aims with an edge-banding machine configuration on which the opto-electronic profile detection system is mounted, positioned along the edge feed line, therefore at the side of the path of panels in transit in the machine, and supervised by suitable control and processing means.

In particular, the invention relates to a linear edge-banding machine of the type known in the machining of edges of wooden panels which are flat and of limited thickness, which pass through the machine, such as flat parts of pieces of furniture,
where the edges are also flat but with profiles which may be curved at the front and rear of each panel. The machine comprises:
- means for feeding the panels in a horizontal plane, in a direction X;
- successive stations for machining the flat edges, to which a panel is conveyed in sequence by the feed means and on which firstly a strip of synthetic material is glued to one of the vertically positioned flat edges, followed by routing to trim the excess edging strip applied, matching it precisely to the respective profiles, using routing units which trim the edging strip itself;
- means for the electronic control of the movements and operations performed on the machine, and for data processing;
where the distinctiveness of the invention lies in the fact that there are first opto-electronic means for the acquisition of points of the images of the front and rear profiles of the edge, located - with reference to the direction of panel feed in direction X - upstream of the edging strip gluing station, and at the side of the edge. The first means are connected to the electronic control means, for the transfer of the data identifying the points acquired. By processing the image point data, the electronic control means reconstruct the respective approximate geometries of the front and rear profiles, allowing commands to be issued for the trimming unit cutting trajectories, to eliminate the excess edging strip applied on the profiles, according to their shape.

The common specification of the first opto-electronic means is such that they have a first, matrix camera located at the side of the edge so as to acquire its true shape, and a pair of photocells which detect panel arrival and activate acquisition of images of the front and rear profiles. There is also a LED ring illuminator coaxially connected to the camera, to correctly illuminate the acquisition field.

Another distinctive feature of the invention is a second camera, located downstream of the trimming units, so that it is suitable for acquiring images of the edge profiles after machining. In this way, the images acquired can be used both for machining quality control purposes and for a check with feedback on the machining.

The second camera is of the linear type, that is to say, suitable for acquiring points on a line (the edge of the panel), and is connected to a relative illuminator which issues a beam of light collimated on the acquisition line, and to a rotary encoder linked to panel feed, whose pulses issue the commands for the emission of flashes of light, therefore acquisitions, at a spatial interval linked to the encoder division step, so as to reconstruct - using close vertical lines - the front and rear profiles of the panel.

The advantages obtained on the machine disclosed, as already partly mentioned above, mainly derive from the possibility of fully automatically identifying the profile on which the machine operates, without the operator having to enter any identification code for the product at infeed, which, as said, could lead to errors.

Another advantage is the acquisition of the profile substantially optically and electronically, avoiding any type of bouncing and vibration associated with the old edge feeler means. The presence of the optical devices renders any mechanical devices superfluous, eliminating all problems associated with the dynamics of masses in motion.

In the final analysis, the present invention allows a completely random sequence of panels to be fed into the machine, as regards the variety of profiles, and their machining without vibrations, all absolutely without any need for operator intervention for the entry of panel identification data. As already said, the panels will be fed into the machine and easily and precisely machined automatically, irrespective of their front or rear profile type.

Therefore, it is obvious how an edge-banding machine equipped with a system with the above-mentioned possibility of acquiring images of the panel front and rear profiles, which can then be used to control the trajectories of the trimming units, has advantages and flexibility noticeably better than the machines described in the prior art. Moreover, it should be noticed that the costs of the parts of which the system consists are very low, since they are electronic components which are now mass produced.

The invention is described in more detail below, with reference to the accompanying drawing which illustrates a preferred embodiment, provided merely by way of example without restricting the scope of the inventive concept, of an edge-banding machine equipped with the optical system for acquisition of images of the edge profiles.

The rest of the machine is identical to one of the possible set-ups of a common and known linear edge-banding machine, and so is not described and illustrated, the illustration substantially showing only the parts relating to the viewing system, which is the innovative feature of the machine relative to the prior art.

Therefore, with reference to the machine conveyor belt zone, where the panels - positioned horizontally - are conveyed in the direction X of their lateral edge, and where the edge undergoes the various machining operations, with reference to the common terminology for the sector:

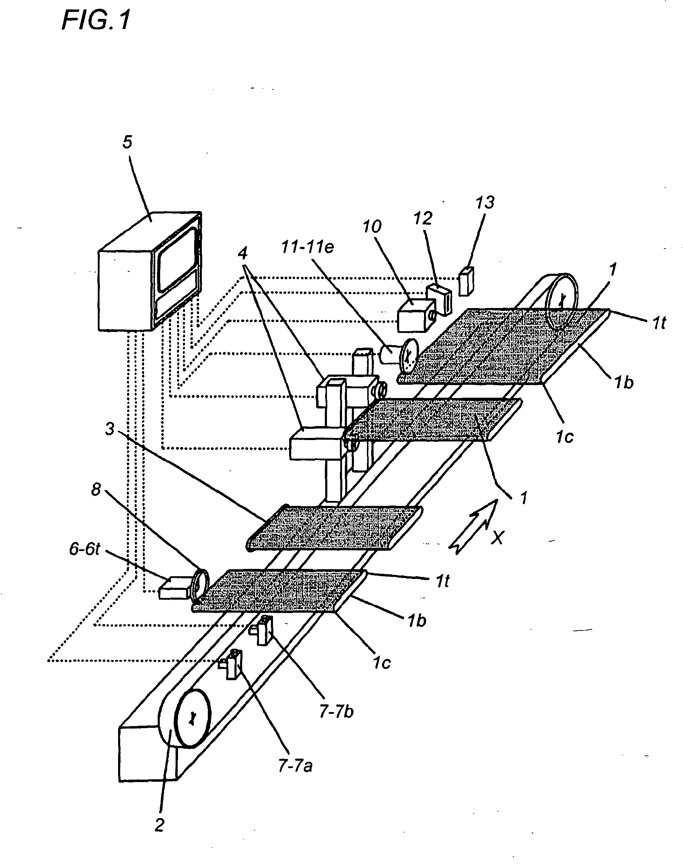

- Figure 1 is an axonometric and schematic view of the conveyor belt zone, illustrating the cameras 6t at infeed and 10 at outfeed, with the relative illuminators 8 and 12, and the relative activation means (respectively the pair of photocells 7a, 7b, and the encoder 11e); also showing the trimming units 4, operating on at least the front profile 1t and the rear profile 1c of the edge 1b; and showing the electronic control and data processing means 5, connected to the image acquisition devices and co-ordinating their operation.

The opto-electronic system characterising the edge-banding machine disclosed is innovative due to the solution it proposes, and is at the same time very simple. The machine, in the preferred embodiment described below and illustrated in the accompanying drawings, in order to recognise the profiles and generate the trimming unit trajectories, operates by means of three modules - ideally identifiable amongst the hardware - software components. In a first module the profile is recognised and its geometric details extracted, in a second module the geometric details are converted into sequences of trajectories for the actuating part of the electronic control means 5 (NC), whilst in a third module the profile fed out of the station in which the trimming units 4 operate is subjected to quality control.

The first module is designed to detect panel arrival in the machine and extract the geometric details characterising the profiles, such as the radii and centres of curvature, angle and length of the segments.

This data is then transferred to the second module, for generation and the issue of the command for the trimming tool trajectories, and to the third module, as a basis for comparison for the quality control.

Obviously, for such purposes considered individually, known technologies are used, which are therefore not described. The above applies in particular to the transfer of data between the various modules, for extraction of the geometric details of the images acquired, even using image post-processing methods.

Physically, downstream of the station for gluing the edging strip 3 on the edge 1b, and on the path of the panel 1 edge at the conveyor belt 2, there is a first, matrix-type camera 6t, connected to two photocells 7a and 7b which activate it, located at a predetermined distance, which may be set on the NC. Both the camera 6t and the photocells are connected to the electronic control means 5, for co-ordinating the acquisition of images relative to the photocell start signals, according to known algorithms. -

The photocells 7a and 7b are intercepted, in that order, by the panel 1 in transit, where the photocell 7b is practically at the optical axis of the lens of the first camera 6t.

The first camera 6t has a first illuminator 8 consisting of LEDs positioned in a ring coaxial with the optical axis of the camera 6t, and designed to illuminate the acquisition field of the first camera while it acquires points 9 of the image of the profiles.

Downstream of the camera 6t the trimming units 4 operate according to the trajectories for which commands are issued by the electronic control means 5.

Said trimming units 4, whose operation is well known and so not described, use routing (trimming) to remove the excess edging strip from the front profile 1t and rear profile 1c of the edge 1b being machined, attempting to reduce the edging strip to a shape which is as far as possible identical to that of the profiles. This is made possible thanks to identification of said shape through the reading taken with the first camera 6t and the subsequent data processing.

At the machine outfeed, that is to say, downstream of the station where the trimming units 4 operate, there is a second camera 10, which is of the linear type and so acquires images of the edge according to a vertical acquisition line, collimated on the edge. In particular, acquisition is activated when the front profile 1t and rear profile 1c of the edge 1b pass. The second camera 10 is also connected to an illuminator 12, and to the relative activation means 11. The illuminator 12 is a source able to emit a vertical beam of light directed onto the edge and collimated precisely on the line where the second camera 10 acquisition occurs, whilst the activation means 11 consist of an encoder 11e linked to the linear motion of the panel by direct contact of a friction wheel keyed on the encoder axis. Thanks to co-ordination by the numeric control means 5, which connect the various components, each encoder pulse can activate the emission of a flash of light from the illuminator 12, and so bring about the effective acquisition of a line of profile 1t or 1c of the edge 1b by the second camera 10.

Again at the machine outfeed, that is to say, downstream of the station where the trimming units 4 operate, there is a laser light emitter - reader 13, of the known type for reading the number and thickness of lines, which emits a light beam that sweeps a vertical plane approximately normal to the vertical plane of the edge 1b. In this way, it detects the position of the points of both the panel 1 and the back of the edging strip 3 applied, and is able to detect any accidental edging strip 3 detachment from the panel 1.

Functionally, the edge-banding machine equipped with the viewing system structured in this way fulfils the preset aim thanks to the reciprocal positioning illustrated and interconnections for the various components, without having to alter the remaining structure of the existing edge-banding machine in any way.

Operatively, and with reference to the reciprocal positioning illustrated, recognition of the profiles 1t and 1c and subsequent trimming of the edging strip 3 at the profiles occurs according to the following methods.

The recognition system is constantly in the "ready" state for processing each panel 1 on the conveyor 2, as follows:
- the first photocell 7a detects panel 1 presence and starts the cycle;
- the panel 1 activates the second photocell 7b, starting the panel speed calculation routine and providing the trigger signal for acquisition of the image points 9 of the profiles by the first camera 6t; the first illuminator 8 consisting of a ring of LEDs is activated; acquisition is terminated when the rear of the panel leaves the second photocell 7b uncovered. During this step, the images acquired are pre-processes with standard image analysis techniques, to improve the quality. In particular, the front and rear pictures are processed to reconstruct a geometry of the profiles 1t and 1c;
- the reconstructed image of each profile is compared with images resident in a library previously saved on the electronic control means 5, based on a comparison of geometric parameters, considered sequentially, such as the radii of curvature, position of centres of curvatures, angle of segments, and so on. In practice, the comparison concerns the components of a vector, of predetermined format, where the profile is considered successfully identified when a vector is found in the library whose components differ from the vector reconstructed through acquisition only by small amounts, which represent inevitable acquisition and processing errors;
- the cutting trajectories are generated for the trimming units 4, the trajectories managed by the NC and transmitted to the unit 4 actuators.

At this point, the trimming operations are performed, based on a profile exactly corresponding to the profiles 1t and 1c, since it was extracted from the library, and where profile acquisition - reconstruction inaccuracies have been eliminated.

However, in order to obtain data about the quality of the machining performed, that is to say, to have a feedback signal on the NC for the correction of any errors, acquisition by the second, linear camera 10 is also used.

This is activated by an encoder 11e, whose rotation is driven by a friction wheel, or equivalent mechanism, in contact with the main surface of the moving panel.

In practice, when the panel reaches the encoder 11e, the camera 10 is activated and a command is issued for the emission by the second illuminator 12 of flashes of light which are close together and collimated precisely on the camera 10 acquisition line. The frequency with which the flashes of light are emitted depends on the speed of rotation of the encoder 11e, therefore, on the panel 1 linear speed, since a flash of light is emitted for each encoder 11e pulse, that is to say, each of its divisions.

Again, as for the camera at infeed, the image is reconstructed by the electronic control and processing means 5, according to known algorithms. In practice, there is a reconstruction using vertical lines side-by-side, the result of which is numerically compared with the geometry of the profile at infeed, to give a vector of differences, which provide the operator with information about the quality of the work done.

Again for quality control purposes, the result of the scan by the laser emitter - reader is also used, as this identifies the appearance of a gap between the edge 1b and the edging strip 3 due to the accidental detachment of the edging strip 3.

As an alternative embodiment to that described above, provided by way of example only and without limiting the scope of the inventive concept, reference may be made to a slightly different solution, substantially in terms of the programs implemented in the machine, and known in themselves. -

In this alternative embodiment, the reconstruction of the geometry of the profiles starting with the respective images acquired by the first camera 6t does not involve any library of known profiles already saved in the machine, but has said geometry reconstructed and suitably adjusted by the control and processing means 5 used directly by the NC actuator part to issue the commands for unit 4 cutting motion.

## Claims

1. A linear edge-banding machine for machining the edges of panels (1) which are substantially flat and of limited thickness, made of wood or similar material, passing through the machine, such as flat parts of furniture; the edges comprising flat edges (1b) with profiles (1t), (1c) respectively at the front and rear of each panel (1); the machine comprising:
- means (2) for feeding the panels (1), in a substantially horizontal plane, in a direction X;
- successive stations for machining the flat edges (1b), to which a panel is conveyed in sequence by the feed means (2) and on which firstly a strip (3) of synthetic material is glued to one of the vertically positioned flat edges (1b), followed by routing which trims the excess edging strip (3) applied to the edge (1b), matching the edging strip (3) precisely to the respective profiles (1t), (1c), by routing units (4) which trim the edging strip (3);
- means (5) for the electronic control of at least part of the movements and operations performed on the machine, and for data processing; the edge-banding machine being **characterised in that** it comprises first opto-electronic means (6) for the acquisition of points (9) of the images of the front (1t) and rear (1c) profiles of the edge (1b), being located - with reference to the direction of panel feed in direction X - upstream of the edging strip gluing station, and at the side of the edge (1b); the first means (6) being connected to electronic control means (5), for the transfer of the data identifying the points (9) acquired, the means (5) reconstructing the respective approximate geometries of the front (1t) and rear (1c) profiles, by processing the data of the points (9), allowing commands to be issued for the trimming unit (4) routing trajectories to eliminate the excess edging strip (3) applied on the profiles (1t) and (1c), according to their shape.

2. The machine according to claim 1, **characterised in that** the first opto-electronic means (6) comprise a first camera (6t).

3. The machine according to claim 2, **characterised in that** the first camera (6t) is of the matrix type.

4. The machine according to claim 2 or 3,
**characterised in that** the optical axis of the lens of the first camera (6t) lies substantially in the middle plane of the panel (1), and is at an angle normal to the edge (1b), so that the image which can be acquired of the profiles (1t) and (1c) substantially corresponds to their true shape.

5. The machine according to any of the foregoing claims, **characterised in that** there are first means (7), connected to the first opto-electronic means (6) and/or to the control means (5), designed to activate the acquisition of images by the first means (6), when the profiles (1t) or (1c) of the edge (1b) pass the first means (6).

6. The machine according to claim 5 and according to any of the claims from 2 to 4, **characterised in that** the first means (7) comprise a pair of photocells (7a), (7b) designed to intercept, **in that** order, panel (1) transit, where the photocell (7b) which intercepts the panel (1) second is substantially at the optical axis of the lens of the first camera (6t).

7. The machine according to claim 6, **characterised in that** the photocells (7a) and (7b) are located - along the axis X - at a known distance entered in the control means (5), making possible both calculation of the actual panel transit speed and activation of the acquisition of images of the rear profile (1c) when it passes the first camera (6t), based on the time taken to cover said known distance, measured from the moment when the photocell (7a) is left uncovered by the panel rear profile (1c).

8. The machine according to one or more of the claims from 2 to 7, **characterised in that** there are first illuminator means (8) connected to the first camera (6t), designed to illuminate its field of acquisition, in particular the edge (1b) passing it.

9. The machine according to claim 8, **characterised in that** the first illuminator means (8) comprise a ring of LED-type lights, the geometric axis of the ring substantially coinciding with the optical axis of the lens of the first camera (6t).

10. The machine according to one or more of the foregoing claims, **characterised in that** the electronic control and data processing means (5) can implement a computerised library containing the nominal geometric characteristics of the possible profiles (1t) and (1c) of the edges (1b), so that the respective approximate geometries of the profiles (1t) and (1c) reconstructed by the control means (5) are used to identify - in the library - the nominal profiles (1t) and (1c) on which the machine currently operates, where the units (4) are then issued with cutting motion commands according to the panel (1) nominal profiles (1t) and (1c).

11. The machine according to one or more of the foregoing claims, **characterised in that**, in the electronic control and data processing means (5), the reconstruction of the approximate geometries of the profiles (1t) and (1c) performed by the control and processing means (5) can be used directly to issue commands to the units (4) for their cutting motion, according to trajectories which conform to the approximate geometries.

12. The machine according to one or more of the foregoing claims, **characterised in that** there is a second camera (10) for acquisition of points (9) of the images at least of the front profile (1t) and rear profile (1c) of the edge (1b), the second camera being located - with reference to the direction of panel feed in direction X - downstream of the station where the routing trimming units (4) operate, and at the side of the edge (1b); the second camera (10) being connected to the electronic control means (5), for the transfer of data identifying the points (9) acquired; the first means (5) processing the points (9) to reconstruct the respective approximate geometries of the profiles (1t) and (1c), after the action of the routing trimming units (4).

13. The machine according to claim 12, **characterised in that** there are second means (11), connected to the second camera (10) and/or to the control means (5), designed to activate the acquisition of images by the second camera (10), when the profiles (1t) or (1c) of the edge (1b) pass it.

14. The machine according to claim 12 or 13, **characterised in that** the second camera (10) is of the linear type, where the optical axis of its lens lies substantially in the middle plane of the panel (1) and is at an angle normal to the edge (1b), and where the acquisition line is at an angle normal to the panel middle plane, so that images of vertical lines of the edge (1b) can be acquired in their true length.

15. The machine according to claim 14, **characterised in that** the second means (11) for activating acquisition by the second camera (10) comprise a rotary encoder (11e) and relative mechanism linking it to the motion of the panel (1); there being a second illuminator (12) which emits a beam of light on the second camera (10) acquisition line; the encoder (11e) activating the acquisition of images by the second camera (10) and issuing commands to the second illuminator (12) to emit a light pulse for each predetermined number of encoder rotation divisions, allowing the acquisition on the profiles (1t) and (1c) of successive lines at a predetermined interval, designed to reconstruct the respective approximate geometries of the profiles (1t) and (1c) after trimming.

16. The machine according to one or more of the claims from 12 to 15, **characterised in that** the electronic control and data processing means (5) run a test, comparing the reconstructed approximate geometries of the profiles after trimming with the corresponding nominal geometries, or those reconstructed from the acquisitions of the first camera (6t) before gluing and trimming, the result of the test being made available on the control means (5) for information about the quality of the machining performed.

17. The machine according to one or more of the claims from 12 to 16, **characterised in that** the electronic control and data processing means (5) run a test, comparing the approximate geometries of the profiles after trimming with the corresponding nominal geometries, or those reconstructed from the acquisitions of the first camera (6t), the result of the test being used to perform a feedback check during machining.

18. The machine according to one or more of the foregoing claims, **characterised in that** there are laser light emitter - reader means (13), of the known type for recognition of lines, whose emission radius covers a plane substantially incident to the plane in which the panel (1) in transit lies; the means (13) being able to detect the position of points of the panel (1) and edging strip (3) already applied and trimmed, and in particular able to detect any accidental detachment of the edging strip (3) from the edge (1b).

## Patentansprüche

1. Lineare Kantenanleimmaschine zum Bearbeiten der Kanten von Platten (1), welche im wesentlichen flach und von begrenzter Dicke und aus Holz oder einem ähnlichen Material hergestellt sind, die durch die Maschine laufen, so wie flache Teile von Möbeln; wobei die Kanten flache Kanten (1b) mit Profilen (1t), (1c) jeweils an dem vorderen und dem hinteren Ende einer jeden Platte (1) sind; wobei die Maschine wie folgt enthält:
- Mittel (2) zum Zuführen der Platten (1) in einer im wesentlichen horizontalen Ebene in einer Richtung (X);
- anschliessende Stationen zum Bearbeiten der flachen Kanten (1b), an welche eine Platte aufeinanderfolgend durch die Zuführmittel (2) geleitet wird, und an welchen zuerst ein Streifen (3) aus synthetischem Material auf eine der vertikal positionierten flachen Kanten (1b) geklebt wird, gefolgt von dem Fräsen, welches den Überstand des an der Kante (1b) angebrachten Kantenstreifens (3) entfernt und somit den Kantenstreifen (3) genau den jeweiligen Profilen (1t), (1c) anpasst, und zwar durch Fräseinheiten (4) welche den Kantenstreifen (3) beschneiden;
- Mittel (5) zum elektronischen Steuern von wenigstens einem Teil der Bewegungen und Abläufe, die an der Maschine ausgeführt werden, und zur Datenverarbeitung;
wobei die Kantenanleimmaschine **dadurch gekennzeichnet ist, dass** sie wenigstens erste optoelektronische Mittel (6) zum Erfassen von Punkten (9) der Bilder der vorderen (1t) und hinteren (1c) Profile der Kante (1b) enthält, angeordnet - unter Bezugnahme auf die Zuführbahn der Platte in Richtung X - stromaufwärts der Anleimstation des Kantenstreifens und seitlich der Kante (1b); wobei die ersten Mittel (6) zwecks Übertragung der die erfassten Punkte (9) identifizierenden Daten an elektronische Steuermittel (5) angeschlossen sind, und wobei die Mittel (5) durch die Verarbeitung der Daten der Punkte (9) die jeweiligen angenäherten Geometrien der vorderen (1t) und hinteren (1c) Profile rekonstruieren, wodurch sie Befehle zum Steuern der Bahnen zum Beschneiden durch die Fräseinheiten (4) ermöglichen, um den Überstand des an den Profilen (1t) und (1c) angebrachten Kantenstreifens (3) in Übereinstimmung mit deren Form zu entfernen.

2. Maschine nach Patentanspruch 1, **dadurch gekennzeichnet, dass** die ersten optoelektronischen Mittel (6) eine erste Kamera (6t) enthalten.

3. Maschine nach Patentanspruch 2, **dadurch gekennzeichnet, dass** die erste Kamera (6t) vom Matrixtyp ist.

4. Maschine nach Patentanspruch 2 oder 3, **dadurch gekennzeichnet, dass** die optische Achse des Objektivs der ersten Kamera (6t) im wesentlichen in der mittleren Ebene der Platte (1) liegt, und zwar in einem Winkel normal zu der Kante (1b), so dass das Bild, welches von den Profilen (1t) und (1c) erfasst werden kann, im wesentlichen deren wirklicher Form entspricht.

5. Maschine nach einem beliebigen der vorstehenden Patentansprüche, **dadurch gekennzeichnet, dass** erste Mittel (7) vorhanden sind, angeschlossen an die ersten optoelektronischen Mittel (6) und/oder an die Steuermittel (5) und dazu bestimmt, das Erfassen von Bildern durch die ersten Mittel (6) zu aktivieren, wenn die Profile (1t) oder (1c) der Kante (1b) an den ersten Mitteln (6) vorbeilaufen.

6. Maschine nach Patentanspruch 5 und nach jedem der Patentansprüche von 2 bis 4, **dadurch gekennzeichnet, dass** die ersten Mittel (7) ein Paar von Fotozellen (7a), (7b) enthalten, dazu bestimmt, in dieser Ordnung die durchlaufende Platte (1) abzufangen, wo die Fotozelle (7b), welche die Platte (1) als zweite abfängt, sich im wesentlichen an der optischen Achse des Objektivs der ersten Kamera (6t) befindet.

7. Maschine nach Patentanspruch 6, **dadurch gekennzeichnet, dass** die Fotozellen (7a) und (7b) entlang der Achse X mit einem bekannten und in die Steuermittel (5) eingegebenen Abstand voneinander angeordnet sind, wodurch die Berechnung der tatsächlichen Durchlaufgeschwindigkeit der Platte wie auch die Aktivierung des Erfassens von Bildern des hinteren Profils (1c) möglich ist, wenn es an der ersten Kamera (6t) vorbeiläuft, und zwar aufgrund der notwendigen Zeit zum Zurücklegen des genannten bekannten Abstandes, gemessen von dem Moment an, in dem die Fotozelle (7a) von dem hinteren Profil (1c) der Platte unbedeckt gelassen wird.

8. Maschine nach einem oder mehreren der Patentansprüche von 2 bis 7, **dadurch gekennzeichnet, dass** erste Beleuchtungsmittel (8) vorhanden sind, angeschlossen an die erste Kamera (6t) und dazu bestimmt, deren Aufnahmefeld zu beleuchten, insbesondere die durch dieses laufende Kante (1b).

9. Maschine nach Patentanspruch 8, **dadurch gekennzeichnet, dass** die ersten Beleuchtungsmittel (8) einen Ring aus Leuchten vom Typ LED enthalten, wobei die geometrische Achse des Ringes im wesentlichen mit der optischen Achse des Objektivs der ersten Kamera (6t) übereinstimmt.

10. Maschine nach einem oder mehreren der vorstehenden Patentansprüche, **dadurch gekennzeichnet, dass** die elektronischen Steuer- und Datenverarbeitungsmittel (5) mit einer computerisierten Bibliothek versehen sein können, enthaltend die nominellen geometrischen Eigenschaften der möglichen Profile (1t) und (1c) der Kanten (1b), so dass die jeweiligen angenäherten und durch die Steuermittel (5) rekonstruierten Geometrien der Profile (1t) und (1c) benutzt werden, um in der Bibliothek die nominellen Profile (1t) und (1c) zu erkennen, an welchen die Maschine im Augenblick arbeitet, wodurch an die Einheiten (4) dann die Befehle für die Schneidbewegung je nach den nominellen Profilen (1t) und (1c) der Platte (1) erteilt werden.

11. Maschine nach einem oder mehreren der vorstehenden Patentansprüche, **dadurch gekennzeichnet, dass** in den elektronischen Steuer- und Datenverarbeitungsmitteln (5) die Rekonstruktion der angenäherten Geometrien der Profile (1t) und (1c), ausgeführt durch die Steuer- und Datenverarbeitungsmittel (5), direkt benutzt werden kann, um Befehle an die Einheiten (4) für deren Schneidbewegung auszusenden, und zwar nach Bahnen, welche den angenäherten Geometrien entsprechenden.

12. Maschine nach einem oder mehreren der vorstehenden Patentansprüche, **dadurch gekennzeichnet, dass** eine zweite Kamera (10) zum Erfassen von Punkten (9) der Bilder von wenigstens dem vorderen Profil (1t) und dem hinteren Profil (1c) der Kante (1b) vorhanden ist, wobei die zweite Kamera - unter Bezugnahme auf die Zuführbahn der Platte in Richtung X - stromabwärts der Station angeordnet ist, an welcher die Fräseinheiten (4) zum Beschneiden arbeiten, und seitlich der Kante (1b); wobei die zweite Kamera (10) an elektronische Steuermittel (5) zum Übertragen der die erfassten Punkte (9) identifizierenden Daten angeschlossen ist; und wobei die ersten Mittel (5) die Punkte (9) verarbeiten, um die jeweiligen angenäherten Geometrien der Profile (1t) und (1c) zu rekonstruieren, und zwar nach der Arbeit der Fräseinheiten (4) zum Beschneiden.

13. Maschine nach Patentanspruch 12, **dadurch gekennzeichnet, dass** zweite Mittel (11) vorhanden sind, angeschlossen an die zweite Kamera (10) und/oder die Steuermittel (5) und dazu bestimmt, das Erfassen von Bildern durch die zweite Kamera (10) zu aktivieren, wenn die Profile (1t) oder (1c) der Kante (1b) an dieser vorbeilaufen.

14. Maschine nach Patentanspruch 12 oder 13, **dadurch gekennzeichnet, dass** die zweite Kamera (10) vom linearen Typ ist, wo die optische Achse ihres Objektivs im wesentlichen in der mittleren Ebene der Platte (1) liegt und sich in einem Winkel normal zu der Kante (1b) befindet, und wo die Aufnahmelinie in einem Winkel normal zu der mittleren Ebene der Platte verläuft, so dass Bilder von vertikalen Linien der Kante (1b) in ihrer wirklichen Länge erfasst werden können.

15. Maschine nach Patentanspruch 14, **dadurch gekennzeichnet, dass** die zweiten Mittel (11) zum Aktivieren der Aufnahme durch die zweite Kamera (10) einen Drehencoder (11e) und einen entsprechenden Mechanismus zum Verbinden desselben mit der Bewegung der Platte (1) enthält; wobei ein zweites Beleuchtungsmittel (12) vorhanden ist, welches einen Lichtstrahl an die Aufnahmelinie der zweiten Kamera (10) aussendet; wobei der Encoder (11e) das Erfassen von Bildern durch die zweite Kamera (10) aktiviert und Befehle an die zweiten Beleuchtungsmittel (12) aussendet, um einen Lichtimpuls für jede vorgegebene Zahl von Teilungen der Encoderumdrehungen auszusenden, wodurch an den Profilen (1t) und (1c) das Erfassen von aufeinanderfolgenden Linien mit einem vorgegebenen Intervall erlaubt ist, dazu bestimmt, die jeweiligen angenäherten Geometrien der Profile (1t) und (1c) nach dem Beschneiden zu rekonstruieren.

16. Maschine nach einem oder mehreren der Patentansprüche von 12 bis 15, **dadurch gekennzeichnet, dass** die elektronischen Steuer- und Datenverarbeitungsmittel (5) einen Testlauf durchführen, wobei sie die rekonstruierten angenäherten Geometrien der Profile nach dem Beschneiden mit den entsprechenden nominellen Geometrien vergleichen, oder jenen durch das Erfassen der ersten Kamera (6t) vor dem Verkleben und Beschneiden rekonstruierten, wobei das Ergebnis des Tests an den Steuermitteln (5) zwecks Information über die Qualität der ausgeführten Bearbeitung zur Verfügung gestellt wird.

17. Maschine nach einem oder mehreren der Patentansprüche von 12 bis 16, **dadurch gekennzeichnet, dass** die elektronischen Steuer- und Datenverarbeitungsmittel (5) einen Testlauf durchführen, wobei sie die angenäherten Geometrien der Profile nach dem Beschneiden mit den entsprechenden nominellen Geometrien vergleichen, oder jenen durch das Erfassen der ersten Kamera (6t) rekonstruierten, wobei das Ergebnis des Tests verwendet wird, um eine Rückwirkungskontrolle während der Bearbeitung durchzuführen.

18. Maschine nach einem oder mehreren der vorstehenden Patentansprüche, **dadurch gekennzeichnet, dass** Laserlichtmittel (13) zum Aussenden - Lesen von bekanntem Typ zum Erkennen von Linien vorhanden sind, deren E-missionsradius eine Ebene abdeckt, die im wesentlichen mit der Ebene zusammenfällt, in welcher die durchlaufende Platte (1) liegt; wobei die Mittel (13) in der Lage sind, die Position von Punkten an der Platte (1) und dem bereits angebrachten und beschnittenen Kantenstreifen (3) zu erfassen, und insbesondere in der Lage sind, jedes zufällige Lösen des Kantenstreifens (3) von der Kante (1b) zu erfassen.

## Revendications

1. Une plaqueuse de chant linéaire pour l'usinage des chants de panneaux (1) essentiellement plats et d'épaisseur limitée, réalisés en bois ou matériau similaire et transitant dans la machine, tels que des éléments plats de meubles ; les chants consistant en des chants plats (1b) ayant des profils (1t) et (1c) respectivement à l'avant et à l'arrière de chaque panneau (1) ; la machine comprenant :
- des moyens (2) pour l'avancement des panneaux (1), sur un plan essentiellement horizontal, dans une direction X ;
- des stations successives pour l'usinage des chants plats (1b), au niveau desquelles un panneau est acheminé en séquence par les moyens d'avancement (2) et où, tout d'abord, une bande (3) de matière synthétique est collée sur un des chants plats (1b) disposés verticalement, l'excédent de la bande de chant (3) appliquée sur le chant (1b) étant ensuite rogné, pour que la bande de chant (3) corresponde exactement aux profils (1t), (1c) respectifs, par des groupes d'affleurage (4) qui rognent la bande de chant (3) elle-même ;
- des moyens (5) pour le contrôle électronique d'au moins une partie des mouvements et des opérations effectués sur la machine, ainsi que pour le traitement des données ; la plaqueuse de chant étant **caractérisée en ce qu'**elle comprend des premiers moyens optoélectroniques (6) pour l'acquisition de points (9) des images des profils avant (1t) et arrière (1c) du chant (1b), situés - en se référant au sens d'avancement des panneaux dans la direction X - en amont de la station de collage de la bande de chant et latéralement au chant (1b) ; les premiers moyens (6) étant reliés aux moyens (5) de contrôle électronique, pour le transfert des données identifiant les points (9) acquis, les moyens (5) reconstruisant les géométries approchées respectives des profils avant (1t) et arrière (1c), en traitant les données des points (9), afin de commander des trajectoires de rognage suivies par les groupes d'affleurage (4) pour éliminer l'excédent de la bande de chant (3) appliquée sur les profils (1t) et (1c) en fonction de la forme de ces derniers.

2. La machine selon la revendication 1, **caractérisée en ce que** les premiers moyens optoélectroniques (6) comprennent une première caméra (6t).

3. La machine selon la revendication 2, **caractérisée en ce que** la première caméra (6t) est du type à matrice.

4. La machine selon la revendication 2 ou 3, **caractérisée en ce que** l'axe optique de l'objectif de la première caméra (6t) est essentiellement situé dans le plan milieu du panneau (1) et est orienté perpendiculairement au chant (1b) de manière à ce que l'image pouvant être acquise des profils (1t) et (1c) corresponde essentiellement à la vraie forme de ceux-ci.

5. La machine selon l'une quelconque des revendications précédentes, **caractérisée en ce que** des premiers moyens (7) sont prévus, reliés aux premiers moyens optoélectroniques (6) et/ou aux moyens de contrôle (5) et destinés à activer l'acquisition d'images par les premiers moyens (6) quand les profils (1t) ou (1c) du chant (1b) passent devant les premiers moyens (6) eux-mêmes.

6. La machine selon la revendication 5 et selon l'une quelconque des revendications de 2 à 4, **caractérisée en ce que** les premiers moyens (7) comprennent une paire de cellules photoélectriques (7a), (7b) destinées à intercepter, dans l'ordre, le transit du panneau (1), où la cellule photoélectrique (7b) qui intercepte en deuxième le panneau (1) est essentiellement située au niveau de l'axe optique de l'objectif de la première caméra (6t).

7. La machine selon la revendication 6, **caractérisée en ce que** les cellules photoélectriques (7a) et (7b) sont situées - le long de l'axe X - à une distance connue entrée dans les moyens de contrôle (5), rendant ainsi possible le calcul de la vitesse de transit réelle du panneau ainsi que l'activation de l'acquisition d'images du profil arrière (1c) quand celui-ci passe devant la première caméra (6t), sur la base du temps mis à parcourir ladite distance connue, tel temps étant mesuré à partir du moment où la cellule photoélectrique (7a) n'est plus obscurcie par le profil arrière (1c) du panneau.

8. La machine selon une ou plusieurs des revendications de 2 à 7, **caractérisée en ce que** des premiers moyens illuminateurs (8) sont prévus, reliés à la première caméra (6t) et destinés à illuminer le champ d'acquisition de cette dernière, et notamment le chant (1b) passant devant.

9. La machine selon la revendication 8, **caractérisée en ce que** les premiers moyens illuminateurs (8) comprennent une couronne de lumières du type DEL, l'axe géométrique de la couronne coïncidant essentiellement avec l'axe optique de l'objectif de la première caméra (6t).

10. La machine selon une ou plusieurs des revendications précédentes, **caractérisée en ce que** les moyens (5) de contrôle électronique et de traitement des données peuvent mettre en oeuvre une bibliothèque informatique contenant les caractéristiques géométriques nominales des profils (1t) et (1c) possibles des chants (1b), de sorte que les géométries approchées respectives des profils (1t) et (1c) reconstruites par les moyens de contrôle (5) sont utilisées pour identifier - dans la bibliothèque - les profils nominaux (1t) et (1c) sur lesquels la machine opère à cet instant, où les groupes (4) sont ensuite commandés pour exécuter des mouvements de coupe en fonction des profils nominaux (1t) et (1c) du panneau (1).

11. La machine selon une ou plusieurs des revendications précédentes, **caractérisée en ce que**, dans les moyens (5) de contrôle électronique et de traitement des données, la reconstruction des géométries approchées des profils (1t) et (1c) effectuée par lesdits moyens (5) de contrôle et de traitement peut être utilisée directement pour commander les groupes (4) dans leur mouvement de coupe, selon des trajectoires conformes auxdites géométriques approchées.

12. La machine selon une ou plusieurs des revendications précédentes, **caractérisée en ce qu'**une deuxième caméra (10) est prévue pour l'acquisition de points (9) des images au moins du profil avant (1t) et du profil arrière (1c) du chant (1b), la deuxième caméra étant située - en se référant au sens d'avancement des panneaux dans la direction X - en aval de la station où opèrent les groupes d'affleurage (4) et latéralement au chant (1b) ; la deuxième caméra (10) étant reliée aux moyens (5) de contrôle électronique, pour le transfert des données identifiant les points (9) acquis ; les premiers moyens (5) traitant les points (9) pour reconstruire les géométries approchées respectives des profils (1t) et (1c) après l'action des groupes d'affleurage (4).

13. La machine selon la revendication 12, **caractérisée en ce que** des deuxièmes moyens (11) sont prévus, reliés à la deuxième caméra (10) et/ou aux moyens de contrôle (5) et destinés à activer l'acquisition d'images par la deuxième caméra (10) quand les profils (1t) ou (1c) du chant (1b) passe devant.

14. La machine selon la revendication 12 ou 13,
**caractérisée en ce que** la deuxième caméra (10) est du type linéaire, où l'axe optique de son objectif est essentiellement situé dans le plan milieu du panneau (1) et est orienté perpendiculairement au chant (1b), et où la ligne d'acquisition est perpendiculaire au plan milieu du panneau, de sorte qu'il est possible d'acquérir des images de lignes verticales du chant (1b) conformément à leur vraie longueur.

15. La machine selon la revendication 14, **caractérisée en ce que** les deuxièmes moyens (11) pour l'activation de l'acquisition par la deuxième caméra (10) comprennent un encodeur rotatif (11e) et mécanisme correspondant de liaison au mouvement du panneau (1) ; un deuxième illuminateur (12) étant prévu pour émettre un faisceau de lumière sur la ligne d'acquisition de la deuxième caméra (10) ; l'encodeur (11e) activant l'acquisition d'images par la deuxième caméra (10) et envoyant des commandes au deuxième illuminateur (12) afin que celui-ci émette une impulsion lumineuse à chaque nombre prédéfini de divisions de rotation de l'encodeur, permettant ainsi l'acquisition sur les profils (1t) et (1c) de lignes successives à un intervalle prédéfini, destinées à reconstruire les géométries approchées respectives des profils (1t) et (1c) après affleurage.

16. La machine selon une ou plusieurs des revendications de 12 à 15, **caractérisée en ce que** les moyens (5) de contrôle électronique et de traitement des données effectuent un test de comparaison entre les géométries approchées reconstruites des profils après affleurage et les géométries nominales correspondantes, ou celles reconstruites à partir des acquisitions de la première caméra (6t) avant collage et affleurage, les résultats du test étant rendus disponibles sur les moyens de contrôle (5) en tant qu'informations sur la qualité de l'usinage effectué.

17. La machine selon une ou plusieurs des revendications de 12 à 16, **caractérisée en ce que** les moyens (5) de contrôle électronique et de traitement des données effectuent un test de comparaison entre les géométries approchées des profils après affleurage et les géométries nominales correspondantes, ou celles reconstruites à partir des acquisitions de la première caméra (6t), les résultats du test étant utilisés pour effectuer un contrôle en rétroaction durant l'usinage.

18. La machine selon une ou plusieurs des revendications précédentes, **caractérisée en ce que** des moyens (13) à lumière laser d'émission - lecture sont prévus, du type connu pour la reconnaissance de lignes et dont les rayons d'émission couvrent un plan essentiellement incident au plan d'appartenance du panneau (1) en transit ; les moyens (13) étant en mesure de détecter la position de points du panneau (1) et de la bande de chant (3) déjà appliquée et rognée et étant notamment en mesure de détecter tout détachement accidentel de la bande de chant (3) du chant (1b).
